# EUROPÄISCHE PATENTSCHRIFT

(11) **EP 4 051 912 B1**
(45) Veröffentlichungstag und Bekanntmachung des Hinweises auf die Patenterteilung: **17.12.2025**
(21) Anmeldenummer: 19808978.1
(22) Anmeldetag: 02.11.2019
(51) Int. Cl.: F16B 21/16, F16B 5/06, F16B 19/10

(54) **BOLZEN MIT VERSTELLBAREM SPANNBEREICH**
BOLT WITH AN ADJUSTABLE CLAMPING REGION
BOULON À ZONE DE SERRAGE RÉGLABLE

(43) Veröffentlichungstag der Anmeldung: 07.09.2022
(73) Patentinhaber: Bernd Siegmund GmbH, 86507 Oberottmarshausen (DE)
(72) Erfinder: SIEGMUND, Bernd, 86845 Grossaitingen (DE); ZINK, Thomas, 86399 Bobingen (DE)
(74) Vertreter: Seifert, Thomas
(86) Internationale Anmeldenummer: PCT/EP2019/025377
(87) Internationale Veröffentlichungsnummer: WO 2021/083473

(56) Entgegenhaltungen:
- EP-A1- 0 563 542
- EP-A1- 2 333 357
- DE-A1- 19 723 425

## Beschreibung

Die Erfindung bezieht sich auf einen Bolzen mit verstellbarem Spannbereich zum Verspannen aneinander liegender Teile, die Öffnungen aufweisen, umfassend ein bolzenartiges Teil, das von einer Seite der aneinander liegenden Teile in die Öffnungen einführbar ist, eine Gewindehülse, die das bolzenartige Teil nach außen radial überragt und in Längsrichtung des bolzenartigen Teils lageveränderbar und festlegbar ist, indem die Gewindehülse mit einem Innengewinde in ein auf einem Teilbereich der Außenseite des bolzenartigen Teils vorgesehenes Außengewinde eingreift, wenigstens ein Spannelement, das an dem der Gewindehülse gegenüberliegenden Ende des bolzenartigen Teils im Inneren des bolzenartigen Teils vorgesehen ist und das durch wenigstens eine Öffnung über den Außenumfang des bolzenartigen Teils hinaus bewegbar ist, und ein Betätigungsmittel, das auf das wenigstens eine Spannelement einwirkt, um die aneinander liegenden Teile zu verspannen, wobei sich das Außengewinde (7) bei in die Öffnungen (21, 22) der aneinander liegenden Teile (19, 20) eingeführtem Bolzen (1) zumindest teilweise in die Öffnung (21, 22) wenigstens eines der aneinander liegenden Teile (19, 20) erstreckt.

Aus der DE 199 17 209 C2 ist ein Bolzen der eingangs genannten Art bekannt, mit dem sich zwei oder mehr aneinander liegende Teile beliebiger Art miteinander verspannen lassen. Derartige Bolzen umfassen ein bolzenartiges Teil, an dessen einem Ende ein Betätigungsmittel vorgesehen ist. Beispielsweise kann von der einen Stirnseite her eine Gewindespindel einschraubbar sein, die an diesem Ende über das bolzenartige Teil übersteht und gleichzeitig als Handrad, meist mit vergrößerten Durchmesser gegenüber dem bolzenartigen Teil dient. Daneben sind auch Schnellspannmechanismen bekannt. An diesem Ende des bolzenartige Teils ist eine Gewindehülse vorgesehen, die das bolzenartige Teil nach außen radial überragt und in Längsrichtung des bolzenartigen Teils lageveränderbar und festlegbar ist, indem die Gewindehülse mit einem Innengewinde in ein auf einem Teilbereich der Außenseite des bolzenartigen Teils vorgesehenes Außengewinde eingreift. Am gegenüberliegenden Ende sind in dem bolzenartigen Teil radial nach außen durchgehende Öffnungen angeordnet, durch die Spannelemente, beispielsweise Kugeln oder Schiebeelemente, so weit nach außen bewegbar sind, dass sie über den Außenumfang des bolzenartigen Teils an dieser Stelle vorstehen. Das radiale nach außen Bewegen von Kugeln als Spannelemente wird mit Hilfe der Gewindespindel erzielt, die im Bereich der Spannelemente über eine zentrale Kugel an den Kugeln angreift. Wird die Gewindespindel vorwärts geschraubt, drückt die zentrale Kugel die Kugeln als Spannelemente nach außen, so dass sie über den Außenumfang des bolzenartigen Teils vorstehen. Vor dem Verspannen befinden sich die Spannelemente im zurückgezogenen Zustand innerhalb des bolzenartigen Teils. Dadurch ist es möglich, den Bolzen mit dem die Spannelemente aufweisenden Ende durch die fluchtenden Öffnungen der aneinander liegenden Teile hindurch zu schieben, bis sich die Gewindehülse an der einen Oberfläche eines Teils abstützt und sich die Spannelemente vor der Außenfläche der Teile befinden. Nun wird die Gewindespindel mit Hilfe des Handgriffs vorwärts geschraubt, wodurch die Spannelemente nach außen gedrückt werden und die aneinander liegenden Teile zwischen Spannelementen und Gewindehülse verspannt werden. Damit ist mit nur wenigen Handgriffen eine einfache, sehr hoch belastbare und spielfreie Verbindung zweier oder mehrerer Teile möglich. Durch die Verstellung der Gewindehülse auf dem Außengewinde können aneinander liegende Teile unterschiedlicher Stärke miteinander verspannt werden. Das Außengewinde erstreckt sich bei in die Öffnungen der aneinander liegenden Teile eingeführtem Bolzen durch die Öffnung eines der aneinander liegenden Teile hindurch und teilweise in die Öffnung des anderen der aneinander liegenden Teile.

Beispielsweise finden derartige Bolzen in Verbindung mit Schweiß- und Spanntischsystemen Verwendung, mit denen sich Gegenstände aufspannen und verschweißen oder auf andere Weise bearbeiten lassen. Zu verspannende Teile können die Tischplatte oder Seitenwangen eines Schweiß- und Spanntischs und ebene oder winkelförmige Zusatzteile sein, die mit Hilfe solcher Bolzen am Tisch befestigt werden können und damit an beliebiger Stelle gerade und rechtwinklige Spannmittel mit Anschlagflächen für das zu fertigende Schweißteil ergeben. Darüber hinaus können solche Bolzen überall dort Verwendung finden, wo zwei oder mehr aneinander liegende Teile miteinander verspannt werden sollen. Die Öffnungen in den aneinander liegenden Teilen können Bohrungen oder Langlöcher sein.

Bei dem erläuterten Stand der Technik ist es jedoch nachteilhaft, dass Querkräfte, die auf eines der aneinander liegenden Teile wirken, das Außengewinde beschädigen können. Insbesondere bei Langlöchern als Öffnungen kann ein sicheres Verspannen nicht gewährleistet werden.

Die DE 197 23 425 A1 beschreibt einen Bolzen mit verstellbarem Spannbereich zum Verspannen aneinander liegender Teile, die Öffnungen aufweisen, wobei der in die Öffnungen der aneinander liegenden Teile eingeführte Bolzen sich in jedem der aneinander liegenden Teile ausschließlich mit einem Bolzenbestandteil ohne Außengewinde erstreckt. Das Außengewinde ist bei diesem Bolzen auf einem Teilbereich der Außenseite des bolzenartigen Teils vorgesehen, der sich außerhalb der aneinander liegenden Teile befindet. Dadurch ist der verstellbare Spannbereich beschränkt . Die US 3101641 A zeigt ein anderes Beispiel eines Bolzens mit verstellbarem Spannbereich zum Verspannen aneinander liegender Teile, wobei die Gewindehülse 42 mit ihrem stirnseitigen Ende 44 an dem zu verspannenden Teil anliegt.

Der Erfindung liegt das Problem zugrunde, den Stand der Technik vorteilhaft weiter zu bilden.

Gelöst wird diese Aufgabe mit den Merkmalen des unabhängigen Anspruchs 1.

Vorteilhafte Ausgestaltungen der Erfindung ergeben sich aus den abhängigen Ansprüchen.

Erfindungsgemäß wird vorgeschlagen, dass der in die Öffnungen der aneinander liegenden Teile eingeführte Bolzen sich in jedem der aneinander liegenden Teile zumindest teilweise mit einem Bolzenbestandteil ohne Außengewinde erstreckt. Dadurch ist gewährleistet, dass der Bolzen in jedem der aneinander liegenden Teile mit seinem vollen Außenumfang, der an die Öffnungen angepasst ist, geführt wird, was die Positionsgenauigkeit verbessert. Gegebenenfalls auftretende Querkräfte werden durch den vollen Durchmesser des Bolzens aufgenommen und wirken nicht auf das Außengewinde. Darüber hinaus wird gerade in Langlöchern ein sicheres Verspannen ermöglicht. Gleichzeitig ist der Spannbereich des Bolzens verstellbar, was eine Verwendung des Bolzens insbesondere für das Befestigen von Laserschablonen auf Lochrastertischen ermöglicht.

Nach einer ersten Ausführungsform der Erfindung ist vorgesehen, dass bei in die Öffnungen der aneinander liegenden Teile eingeführtem Bolzen sich das Außengewinde lediglich teilweise bis in eines der aneinander liegenden Teile erstreckt. Dadurch wird erreicht, dass sich der Teil des bolzenartigen Teils ohne Außengewinde in einem der aneinander liegenden Teile vollständig und in dem anderen der aneinander liegenden Teile zumindest teilweise erstreckt. Querkräfte auf eines der aneinander liegenden Teile wirken damit immer auf den vollen Durchmesser des bolzenartigen Teils und nicht auf das Außengewinde.

Um eine möglichst große Möglichkeit zur Verstellung des Spannbereichs zu erzielen, wird vorgeschlagen, dass das Innengewinde nur in einem Teilbereich der Gewindehülse vorgesehen ist und der restliche Innenbereich der Gewindehülse das Außengewinde übergreift.

Erfindungsgemäß wird vorgesehen, dass die Gewindehülse einen Ansatz aufweist, der einen dem Außenumfang des bolzenartigen Teils entsprechenden Außenumfang besitzt und in eine der Öffnungen der aneinander liegenden Teile einführbar ist. Damit erstreckt sich beim Verspannen ein Teil der Gewindehülse in die Öffnung eines der aneinander liegenden Teile und der Bereich des bolzenartigen Teils ohne Außengewinde in die Öffnung des anderen der aneinander liegenden Teile. Auch hier wirken Querkräfte auf eines der aneinander liegenden Teile immer auf den vollen Durchmesser des bolzenartigen Teils und nicht auf das Außengewinde, wobei dies zum einen unmittelbar und zum anderen über den Ansatz der Gewindehülse erfolgt.

Um ein ungewolltes Verstellen der Gewindehülse auf dem Außengewinde zu verhindern, wird vorgeschlagen, dass die Gewindehülse einen innen liegenden O-Ring aufweist, der die Verstellbarkeit der Gewindehülse auf dem Außengewinde hemmt.

Um die Einstellung des Spannbereichs zu erleichtern, wird vorgeschlagen dass das Außengewinde eine Anfräsung aufweist, in der eine Skala für die Einstellung der Dicke der aneinander liegenden Teile angebracht ist.

In der Zeichnung ist die Erfindung anhand von Ausführungsbeispielen näher erläutert. Es zeigen:
Fig. 1 eine perspektivische Ansicht einer ersten nicht beanspruchten Ausführungsform des Bolzens,
Fig. 2 verschiedene Ansichten des Bolzens,
Fig. 3 einen Schnitt entlang der Linie III-III der Fig. 2,
Fig. 4 eine perspektivische Ansicht der Spannsituation des Bolzens in einem Langloch,
Fig. 5 eine Oberansicht der Spannsituation des Bolzens in einem Langloch,
Fig. 6 einen Schnitt entlang der Linie VI-VI der Fig. 5,
Fig. 7a eine vergrößerte Ansicht des Bolzens mit einer Skala,
Fig. 7b eine Ansicht des Bolzens in einem aufgeschnittenen Teil,
Fig. 8 eine perspektivische Ansicht einer zweiten erfindungsgemäßen Ausführungsform des Bolzens,
Fig. 9 verschiedene Ansichten des Bolzens,
Fig. 10 einen Schnitt entlang der Linie X-X der Fig. 9,
Fig. 11 eine perspektivische Ansicht der Spannsituation des Bolzens in einem Langloch,
Fig. 12 eine Oberansicht der Spannsituation des Bolzens in einem Langloch,

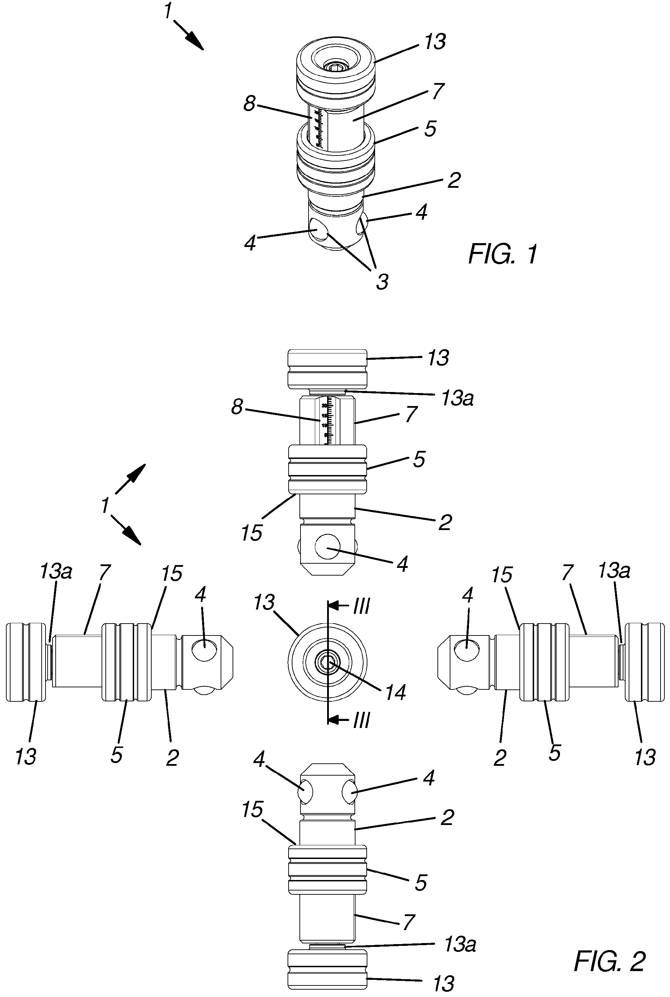

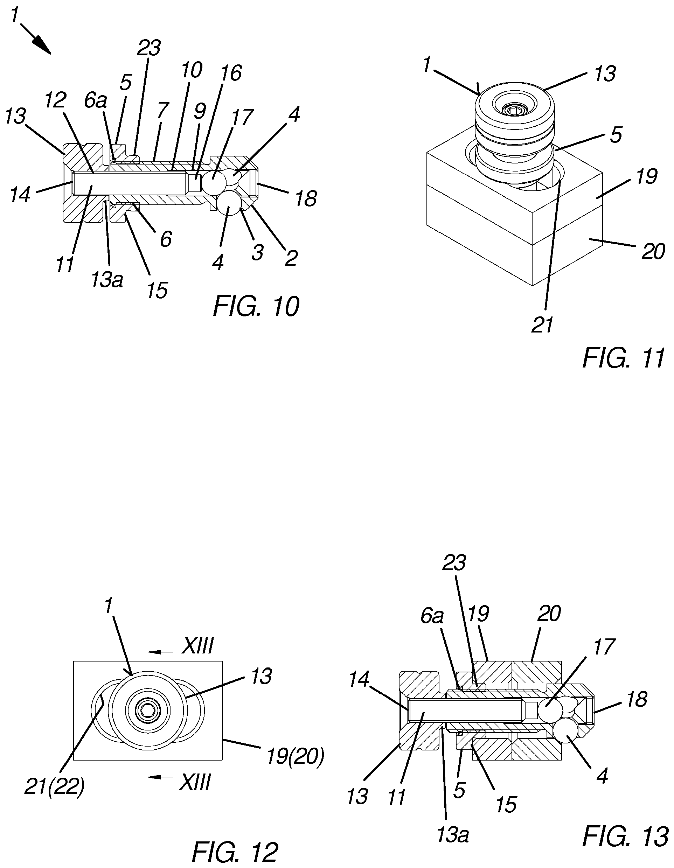

Fig. 13 einen Schnitt entlang der Linie XIII-XIII der Fig. 12, In den Fig. 1, 2 und 3 ist eine erste Ausführungsform eines Bolzens 1 dargestellt. Der Bolzen 1 umfasst ein bolzenartiges Teil 2, das in die Öffnungen von aneinander liegenden Teilen eingeführt werden kann. Das bolzenartige Teil 2 wird in einem Endbereich von Öffnungen 3 durchdrungen, in welchen Kugeln 4 als Spannelemente radial hin und her bewegbar sind, aufgrund einer nicht dargestellten Umbördelung am äußeren Rand der Öffnungen 3 oder einer anderen Sicherung, wie etwa eines O-Rings, diese jedoch nicht vollständig verlassen können.

Am anderen Endbereich des bolzenartigen Teils 2 überragt eine Gewindehülse 5 das bolzenartige Teil 2 radial nach außen und ist in Längsrichtung des bolzenartigen Teils 2 lageveränderbar und festlegbar, indem die Gewindehülse 5 mit einem Innengewinde 6 in ein auf einem Teilbereich der Außenseite des bolzenartigen Teils 2 vorgesehenes Außengewinde 7 eingreift. Die Gewindehülse 5 weist einen innen liegenden O-Ring 6a auf, der die

Verstellbarkeit der Gewindehülse 5 auf dem Außengewinde 7 hemmt. Das Innengewinde 6 ist dabei nur in einem Teilbereich der Gewindehülse 5 vorgesehen und der restliche Innenbereich der Gewindehülse 5 übergreift das Außengewinde 7. Aus Gründen der Übersichtlichkeit ist das Außengewinde 7 in den Fig. 1 und 2 nicht detailliert dargestellt. Das Außengewinde 7 weist eine Anfräsung auf, in der eine Skala 8 für die Einstellung der Dicke der aneinander liegenden Teile angebracht ist.

Im Inneren des bolzenartigen Teils 2 ist eine Bohrung 9 vorgesehen, die ein Innengewinde 10 aufweist. In die Bohrung 9 ist eine Gewindespindel 11, die ein entsprechendes Außengewinde 12 aufweist, gegenüber dem bolzenartigen Teil 2 verschaubbar. Die Gewindespindel 11 ragt dabei stirnseitig über das bolzenartige Teil 2 und die Gewindehülse 5 hinaus und ist dort zu einem Handgriff 13 verbreitert. Der Handgriff 13 ist drehfest, gegebenenfalls einstückig mit der Gewindespindel 11 verbunden und weist an seinem stirnseitigen Ende einen Innensechskant 14 zur Aufnahme eines entsprechenden Schlüssels mit Hebelarm auf. Auf der dem bolzenartigen Teil 2 zugewandten Seite ist der Handgriff 13 mit einem Ansatz 13a versehen, der verhindert, dass der Bolzen 1 bei falsch eingestelltem Spannbereich überdreht und somit beschädigt werden kann. Der Ansatz 13a ist jedoch so klein und mit entsprechender Höhe gewählt, dass für den Benutzer keine Quetschgefahr besteht.

Der Handgriff 13 und/oder die Gewindehülse 5 können zur Erhöhung der Griffigkeit gerändelt oder rutschfest beschichtet sein.

Die Gewindehülse 5 ist in Längsrichtung gegenüber dem bolzenartigen Teil 2 auf dem Außengewinde 7 lageveränderbar und festlegbar. Die Gewindehülse 5 besitzt dabei vorzugsweise den gleichen Außendurchmesser wie der Handgriff 13 und insbesondere einen größeren Außendurchmesser als der Durchmesser der Öffnungen in den aneinander liegenden Teilen, so dass die Gewindehülse mit ihrem stirnseitigen Ende 15 an dem zu verspannenden Teil anliegt.

Beim Verspannen greift die Gewindespindel 11 mit ihrem, dem Handgriff 13 gegenüberliegenden Ende 16 über eine zentrale Kugel 17 an den Kugeln 4 an und verschiebt die Kugeln 4 radial nach außen. Es versteht sich, dass auf die zentrale Kugel 17 auch verzichtet werden könnte.

In die Bohrung 9 ist ein kegelförmiger Gewindestift 18 eingeschraubt, der zur Begrenzung der radialen Bewegungsmöglichkeit der Kugeln 4 nach innen dient. Der Gewindestift 18 kann nach dem Einsetzen der Kugeln 4, 17 eingeschraubt werden. zur Wartung und/oder Reparatur kann der Gewindestift 18 wieder entfernt werden, so dass die Kugeln 4 sich vollständig nach innen bewegen und aus dem bolzenartigen Teil 2 herausgenommen werden können.

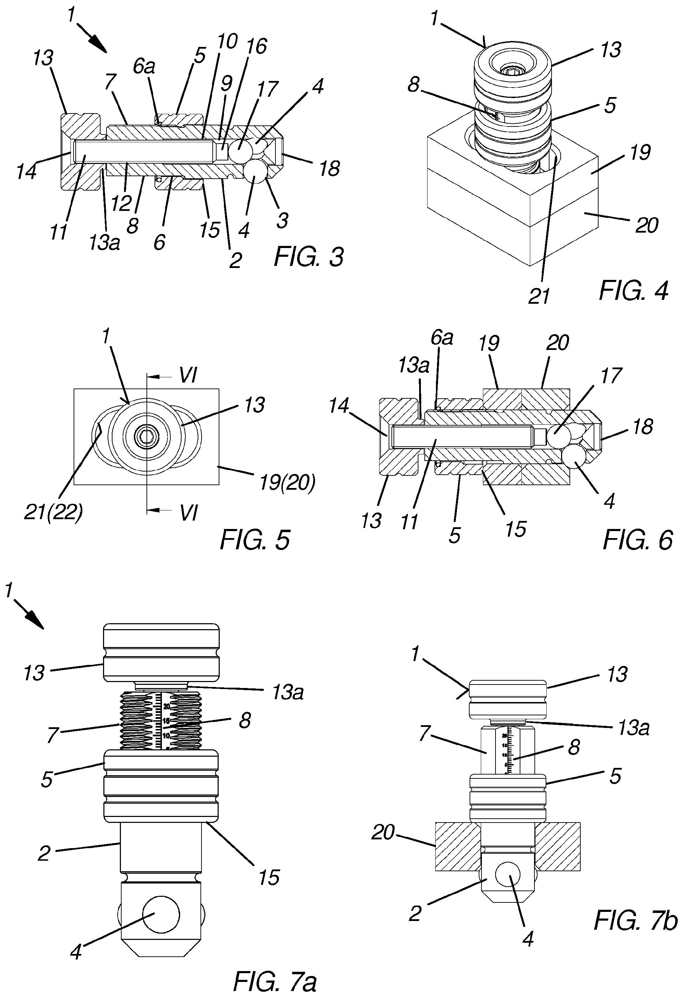

Die Spannsituation des Bolzens 1 in einem Langloch wird anhand der Fig. 4, 5 und 6 erläutert.

Zunächst wird der Spannbereich des Bolzens 1 an die Stärke der aneinander liegenden Teile 19, 20 angepasst, indem die Gewindehülse 5 auf dem Außengewinde 7 verstellt wird, wobei die Skala 8 Verwendung findet. Anschließend wird das bolzenartige Tiel 2 von einer Seite der aneinander liegenden Teile 19, 20 in die Langlöcher 21, 22 eingeführt.

Der Bolzen 1 wird gespannt, indem mit Hilfe des Handgriffs 13 die Gewindespindel 11 vorwärts gegenüber dem bolzenartigen Teil 2 verschraubt wird, während die Gewindehülse 5 mit ihrem stirnseitigen Ende 15 an einem der aneinander liegenden Teile 19 anliegt. Die Kugel 17 drückt beim Spannen des Bolzens 1 die Kugeln 4 radial nach außen, bis diese an dem anderen der aneinander liegenden Teile 20 anliegen und die Teile 19, 20 verspannen.

Wie sich aus Fig. 6 ergibt, erstreckt sich das Außengewinde 7 lediglich teilweise bis in das Teil 19, so dass der in die Öffnungen der aneinander liegenden Teile 19, 20 eingeführte Bolzen 1 sich in jedem der aneinander liegenden Teile 19, 20 zumindest teilweise mit einem Bolzenbestandteil ohne Außengewinde 7 erstreckt. In der Fig. 6 erstreckt sich in dem Teil 20 das bolzenartige Teil 2 vollständig und in dem Teil 19 teilweise mit einem Bereich ohne Außengewinde 7.

In der vergrößerten Darstellung des Bolzens 1 der Fig. 7a ist die Skala 8 in einer Anfräsung des Außengewindes 7 besonders deutlich zu erkennen.

Die Skala ist dabei so positioniert, dass von einem Teil mit definierter Dicke, beispielsweise einem Schweiß- und Spanntisch, die entsprechende Dicke des zweiten Teils eingestellt werden kann. In der Darstellung der Fig. 7b befindet sich der Bolzen 1 lediglich in einem Teil 20 mit definierter Dicke, beispielsweise einem Schweiß- und Spanntisch. Die Gewindehülse 5 wurde dazu auf die Position 0 mm der Skala 8 eingestellt. Um ein Blech mit einer Materialstärke von 5 mm auf dem Teil 20 zu spannen, wird die Gewindehülse auf die Position 5 mm der Skala 8 eingestellt.

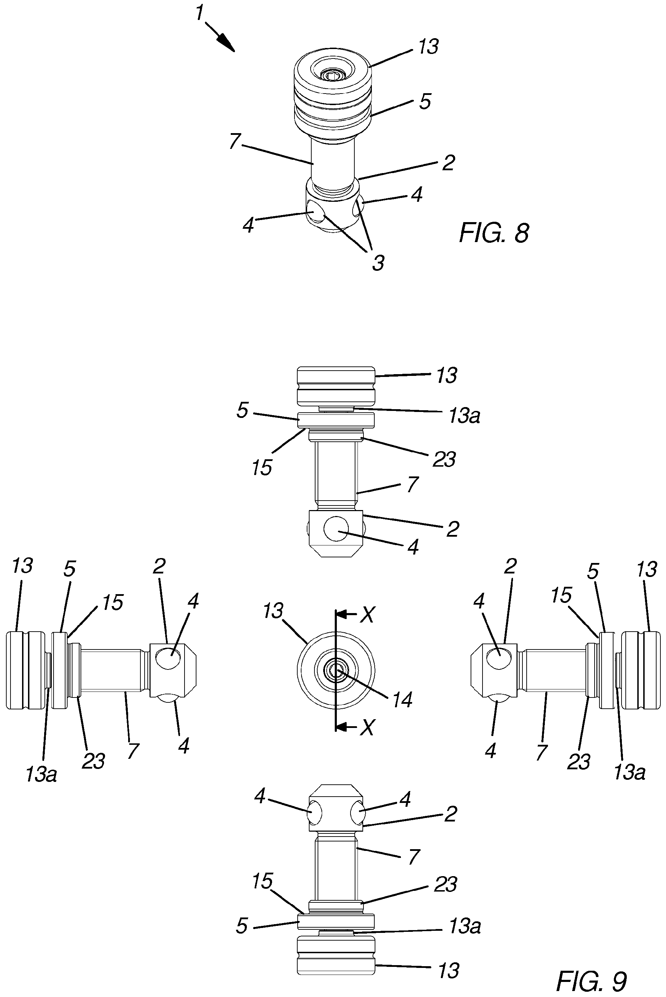

In den Fig. 8, 9 und 10 ist eine zweite erfindungsgemäße Ausführungsform eines Bolzens 1 dargestellt, der sich im wesentlichen durch die Ausgestaltung der Gewindehülse 5 und des Außengewindes 7 unterscheidet. Übereinstimmende Bestandteile sind daher mit denselben Bezugszeichen versehen und es wird ergänzend auf die Beschreibung der Ausführungsform der Fig. 1, 2 und 3 Bezug genommen.

Die Gewindehülse 5 weist einen Ansatz 23 auf, der einen dem Außenumfang des bolzenartigen Teils 2 entsprechenden Außenumfang besitzt und in eine der Öffnungen der aneinander liegenden Teile einführbar ist. Bei dieser Ausführungsform kann sich das Außengewinde 7 über einen größeren Bereich des bolzenartigen Teils 2 erstrecken. Dadurch ergibt sich ein großer Verstellbereich bei einer geringen Baugröße des Bolzens 1. Zur Hemmung der Verstellung der Gewindehülse 5 auf dem Außengewinde 7 ist wiederum ein innen liegender O-Ring 6a vorgesehen.

Die Spannsituation des Bolzens 1 in einem Langloch wird anhand der Fig. 11, 12 und 13 erläutert.

Zunächst wird der Spannbereich des Bolzens 1 an die Stärke der aneinander liegenden Teile 19, 20 angepasst, indem die Gewindehülse 5 auf dem Außengewinde 7 verstellt wird. Anschließend wird das bolzenartige Teil 2 von einer Seite der aneinander liegenden Teile 19, 20 in die Langlöcher 21, 22 eingeführt. Dabei wird der Ansatz 23 in das Langloch 21 eingeführt.

Der Bolzen 1 wird gespannt, indem mit Hilfe des Handgriffs 13 die Gewindespindel 11 vorwärts gegenüber dem bolzenartigen Teil 2 verschraubt wird, während die Gewindehülse 5 mit ihrem stirnseitigen Ende 15 an einem der aneinander liegenden Teile 19 anliegt und sich mit ihrem Ansatz 23 in dem Langloch 21 befindet. Die Kugel 17 drückt beim Spannen des Bolzens 1 die Kugeln 4 radial nach außen, bis diese an dem anderen der aneinander liegenden Teile 20 anliegen und die Teile 19, 20 verspannen.

Wie sich aus Fig. 13 ergibt, kann sich das Außengewinde 7 über einen größeren Bereich des bolzenartigen Teils 2 erstrecken. In dem Teil 20 erstreckt sich das bolzenartige Teil 2 nur teilweise mit einem Bereich ohne Außengewinde 7 und in dem Teil 19 befindet sich der Ansatz 23. Auch bei dieser Ausführungsform ist gewährleistet, dass auftretende Querkräfte nicht auf das Außengewinde 7 wirken können.

Auch der Bolzen 1 dieser Ausführungsform könnte mit einer Skala 8 versehen sein, indem das Außengewinde 7 eine Anfräsung aufweist, in der die Skala 8 für die Einstellung der Dicke der aneinander liegenden Teile angebracht ist.

### Bezugszeichenliste

- 1: Bolzen
- 2: bolzenatriges Teil
- 3: Öffnungen in 2
- 4: Kugeln
- 5: Gewindehülse
- 6: Innengewinde von 5
- 6a: O-Ring in 5
- 7: Außengewinde von 2
- 8: Skala
- 9: Bohrung in 2
- 10: Innengewinde in 9
- 11: Gewindespindel
- 12: Außengewinde von 11
- 13: Handgriff von 11
- 13a: Ansatz an 13
- 14: Innensechskant von 13
- 15: stirnseitiges Ende von 5
- 16: Ende von 11
- 17: Kugel
- 18: Gewindestift
- 19, 20: Teile
- 21, 22: Langlöcher von 19, 20
- 23: Ansatz von 5

## Patentansprüche

1. Bolzen (1) mit verstellbarem Spannbereich zum Verspannen aneinander liegender Teile (19, 20), die Öffnungen (21, 22) aufweisen, umfassend
ein bolzenartiges Teil (2), das von einer Seite der aneinander liegenden Teile (19, 20) in die Öffnungen (21, 22) einführbar ist,
eine Gewindehülse (5), die das bolzenartige Teil (2) nach außen radial überragt und in Längsrichtung des bolzenartigen Teils (2) lageveränderbar und festlegbar ist, indem die Gewindehülse (5) mit einem Innengewinde (6) in ein auf einem Teilbereich der Außenseite des bolzenartigen Teils (2) vorgesehenes Außengewinde (7) eingreift,
wenigstens ein Spannelement (4), das an dem der Gewindehülse (5) gegenüberliegenden Ende des bolzenartigen Teils (2) im Inneren des bolzenartigen Teils (2) vorgesehen ist und das durch wenigstens eine Öffnung (9) über den Außenumfang des bolzenartigen Teils (2) hinaus bewegbar ist, und
ein Betätigungsmittel (11), das auf das wenigstens eine Spannelement (4) einwirkt, um die aneinander liegenden Teile (19, 20) zu verspannen,
wobei der in die Öffnungen (21, 22) der aneinander liegenden Teile (19, 20) einführbare Bolzen (1) sich in jedem der aneinander liegenden Teile (19, 20) zumindest teilweise mit einem Bolzenbestandteil ohne Außengewinde erstrecken kann,
**dadurch gekennzeichnet, dass**
die Gewindehülse (5) einen Ansatz (23) aufweist, der einen dem Außenumfang des bolzenartigen Teils (2) entsprechenden Außenumfang besitzt und in eine der Öffnungen (21, 22) der aneinander liegenden Teile (19, 20) einführbar ist.

2. Bolzen (1) nach Anspruch 1, **dadurch gekennzeichnet, dass** die Gewindehülse (5) einen innen liegenden O-Ring (6a) aufweist, der die Verstellbarkeit der Gewindehülse (5) auf dem Außengewinde (7) hemmt.

3. Bolzen (1) nach einem der vorhergehenden Ansprüche, **dadurch gekennzeichnet, dass** das Außengewinde (7) eine Anfräsung aufweist, in der eine Skala (8) für die Einstellung der Dicke der aneinander liegenden Teile (19, 20) angebracht ist.

## Claims

1. Bolt (1) with adjustable clamping range for clamping abutting parts (19, 20), which have openings (21, 22), comprising
a bolt-like part (2) which is insertable into the openings (21, 22) from one side of the abutting parts (19, 20),
a threaded sleeve (5) which projects radially outwardly beyond the bolt-like part (2) and is positionally adjustable and fixable in longitudinal direction of the bolt-like part (2) by engaging an internal thread (6) of the threaded sleeve (5) in an external thread (7) provided on a portion of the outer side of the bolt-like part (2),
at least one clamping element (4) which is provided at the end of the bolt-like part (2) opposite the threaded sleeve (5) inside the bolt-like part (2) and which is movable beyond the outer circumference of the bolt-like part (2) through at least one opening (9), and
an actuator (11) which acts on the at least one clamping element (4) in order to clamp the abutting parts (19, 20),
wherein the bolt (1) insertable into the openings (21, 22) of the abutting parts (19, 20) can extend in each of the abutting parts (19, 20) at least partially with a bolt component without external thread,
**characterized in that**
the threaded sleeve (5) includes a projection (23) which has an outer circumference corresponding to the outer circumference of the bolt-like part (2) and is insertable into one of the openings (21, 22) of the abutting parts (19, 20).

2. Bolt (1) according to claim 1, **characterized in that** the threaded sleeve (5) includes an internal O-ring (6a) which inhibits the adjustability of the threaded sleeve (5) on the external thread (7).

3. Bolt (1) according to one of the preceding claims, **characterized in that** the external thread (7) has a milled recess in which a scale (8) for adjusting the thickness of the abutting parts (19, 20) is attached.

## Revendications

1. - Boulon (1) à zone de serrage réglable permettant de serrer ensemble des pièces (19, 20) qui s'appuient l'une contre l'autre et qui présentent des ouvertures (21, 22), ledit boulon comportant :
une partie en forme de boulon (2) qui est apte à être introduite dans les ouvertures (21, 22) par un côté des pièces (19, 20) s'appuyant l'une contre l'autre ;
un manchon fileté (5) qui fait saillie radialement vers l'extérieur à partir de la pièce en forme de boulon (2) et dont la position peut être modifiée et qui peut être fixé selon la direction longitudinale de la pièce en forme de boulon (2) en ce que le manchon fileté (5) s'engage, au moyen d'un filetage interne (6), dans un filetage externe (7) disposé sur une zone partielle du côté externe de la pièce en forme de boulon (2),
au moins un élément de serrage (4) qui est prévu à l'intérieur de la partie en forme de boulon (2), à l'extrémité de la partie en forme de boulon (2) opposée au manchon fileté (5), et qui est déplaçable au-delà de la périphérie externe de la partie en forme de boulon (2) à travers au moins une ouverture (9), et
un moyen d'actionnement (11), qui agit sur ledit au moins un élément de serrage (4) afin de serrer les pièces (19, 20) s'appuyant l'une contre l'autre,
le boulon (1) apte à être introduit dans les ouvertures (21, 22) des pièces (19, 20) s'appuyant l'une contre l'autre pouvant s'étendre dans chacune des pièces (19, 20) s'appuyant l'une contre l'autre au moins en partie au moyen d'un composant de boulon sans filetage externe,
**caractérisé par le fait que**
le manchon fileté (5) présente un épaulement (23) qui possède une périphérie externe correspondant à la périphérie externe de la partie en forme de boulon (2) et qui est apte à être introduit dans l'une des ouvertures (21, 22) des pièces (19, 20) s'appuyant l'une contre l'autre.

2. - Boulon (1) selon la revendication 1, **caractérisé par le fait que** le manchon fileté (5) présente un joint torique interne (6a) qui empêche le réglage du manchon fileté (5) sur le filetage externe (7).

3. - Boulon (1) selon l'une des revendications précédentes, **caractérisé par le fait que** le filetage externe (7) présente un fraisage dans lequel est appliquée une échelle (8) pour le réglage de l'épaisseur des pièces (19, 20) s'appuyant l'une sur l'autre.
